# NOUVEAU FASCICULE DE BREVET EUROPEEN

(11) **EP 2 071 708 B2**
(45) Date de publication et mention de la décision concernant l'opposition: **19.08.2020**
(45) Mention de la délivrance du brevet: 22.09.2010
(21) Numéro de dépôt: 08170130.2
(22) Date de dépôt: 27.11.2008
(51) Int. Cl.: H02K 7/08

(54) **Couronne d'orientation motorisée**
Motorisierter Drehkranz
Motorised slewing ring

(30) Priorité: 13.12.2007 FR 0759818
(43) Date de publication de la demande: 17.06.2009
(73) Titulaire: Defontaine, 85530 La Bruffière (FR)
(72) Inventeur: Jacquemont, Eric, 44190 Clisson (FR); Delacou, Jean-Michel, 85600 Bouffere (FR)
(74) Mandataire: Novagraaf Technologies

(56) Documents cités:
- WO-A-03/077404
- WO-A-2004/068678
- WO-A1-2007/107416
- DE-A1-102004 014 640
- DE-A1-102005 024 004
- FR-A- 967 895
- IT-A1- MI 920 815
- US-A1- 2007 222 325

## Description

La présente invention concerne, de façon générale, le domaine des procédés de fabrication des couronnes d'orientation motorisées et des procédés de fabrication de telles couronnes.

Plus particulièrement, l'invention concerne la fabrication d'une couronne d'orientation motorisée, comprenant deux bagues annulaires montées en rotation l'une par rapport à l'autre selon un axe de rotation de couronne, et un moteur de rotation comprenant une partie bobinée et une partie aimantée.

Il est connu des couronnes d'orientation motorisées du type de celles des documents US-A-2007/0222325 et WO-A-03/077404, ITMI 92 0815, DE 10 2005 024 004 et WO 2007 107 416.

Dans ce contexte, la présente invention a pour but de proposer un procédé de fabrication d'une couronne d'orientation motorisée de production aisée modulaire selon la revendication 1.

Préférentiellement les blocs aimantés sont disposés à intervalles réguliers les uns des autres.

Préférentiellement certains au moins des blocs aimantés sont disposés en vis-à-vis de certains au moins des blocs bobinés.

Le fait de former le moteur en fixant :
- sur une première bague des blocs aimantés comportant chacun des aimants propres à chaque bloc aimanté ; et
- sur une seconde bague des blocs bobinés comportant chacun leur bobinage propre;
permet de simplifier la fabrication des couronnes motorisées de grands diamètres généralement supérieurs à 1 mètre puisque les blocs aimantés et bobinés peuvent être standardisés et le nombre de blocs bobinés et leurs emplacements sur les bagues peuvent être adaptés simplement pour définir la puissance de motorisation de la couronne.

La motorisation de couronnes d'orientation de grands diamètres supérieurs à 1 mètre est normalement particulièrement complexe car elle nécessite l'adaptation de nombreuses pièces pour la motorisation. A contrario avec la présente invention qui utilise des blocs que l'on fixe sur les bagues, on peut fabriquer aisément une motorisation, et cela facilite également les opérations de maintenance puisque les blocs peuvent être échangés un à un sans nécessité de changer l'ensemble de la motorisation complet (sans avoir à démonter l'ensemble des mécanismes passant par le centre de la couronne).

Les blocs aimantés et les blocs bobinés sont tous indépendants les uns des autres.

Préférentiellement, on fait en sorte que l'une des bagues soit une bague fixe sur laquelle est assemblée la partie bobinée et que l'autre bague soit une bague mobile sur laquelle est fixée la partie aimantée.

Ce mode de réalisation est avantageux car l'alimentation de la partie bobinée s'en trouve simplifiée par rapport à un mode de réalisation où elle serait sur une bague mobile.

Dans un mode de réalisation préférentiel la bague sur laquelle est assemblée la partie bobinée est une bague intérieure et la bague sur laquelle est fixée la partie aimantée est une bague extérieure.

Dans un mode de réalisation alternatif au précédent, la bague sur laquelle est assemblée la partie bobinée est une bague extérieure et la bague sur laquelle est fixée la partie aimantée est une bague intérieure.

Selon l'invention les blocs bobinés soient identiques entre eux.

Ceci est particulièrement économique puisque des blocs bobinés sont ainsi standardisés et peuvent être utilisés pour motoriser des couronnes de différents diamètres sans avoir à changer de type de blocs bobinés à chaque diamètre de couronne.

Préférentiellement on fait en sorte que chaque bloc bobiné soit un bloc bobiné de moteur linéaire, c'est-à-dire un bloc bobiné adapté à générer un champ magnétique glissant à déplacement linéaire.

L'utilisation d'un bloc bobiné de moteur linéaire dans une application de motorisation de bague tournante est particulièrement avantageuse car un bloc bobiné de moteur linéaire est peu cher à produire par rapport à un bloc bobiné recourbés dont le rayon de courbure doit être adapté en fonction du rayon de la couronne.

On peut également faire en sorte que lesdits blocs bobinés soient disposés sur une surface plane annulaire de ladite bague sur laquelle ils sont fixés. Ceci facilite le montage de blocs bobinés sur un même plan de bague sans avoir à adapter ces blocs à la courbure de la bague.

On peut également faire en sorte que ladite surface plane annulaire sur laquelle sont disposés lesdits blocs bobinés soit formée par un épaulement de cette bague.

L'épaulement sur une bague est un moyen aisé de réaliser une surface plane annulaire d'autant que cette surface plane annulaire est perpendiculaire à l'axe d'orientation de la couronne.

On peut également faire en sorte que chacun desdits blocs bobinés possède une face plane (A) assemblée sur ladite surface plane annulaire, chaque face plane (A) de bloc bobiné étant ainsi assemblée sur une face plane complémentaire de l'épaulement de bague. Ce mode permet un assemblage plan sur plan.

On peut également faire en sorte que chaque bloc bobiné possède une autre face plane (B) parallèle à sa face plane assemblée sur ladite surface plane annulaire, cette autre face plane (B) étant placée parallèlement à un chemin de déplacement des blocs aimantés. Ce choix est favorable à ce que les distances minimales entre blocs bobinés et blocs aimantés soit homogène et la plus réduite possible pour favoriser le rendement moteur de la couronne d'orientation.

Préférentiellement on fait en sorte que chaque bloc bobiné fixé sur l'une des bagues possède une face plane d'assemblage et que la bague sur laquelle sont fixés lesdits blocs bobinés possède une face plane complémentaire en forme de disque contre laquelle les faces planes d'assemblage des blocs bobinés sont en appui (cette face plane complémentaire en forme de disque étant coaxiale de l'axe de rotation de couronne). Ce mode de réalisation permet un assemblage simplifié plan sur plan.

Dans un cas particulier, la face plane complémentaire en forme de disque est formée par un épaulement de bague, lesdits blocs bobinés étant assemblés sur un épaulement de bague.

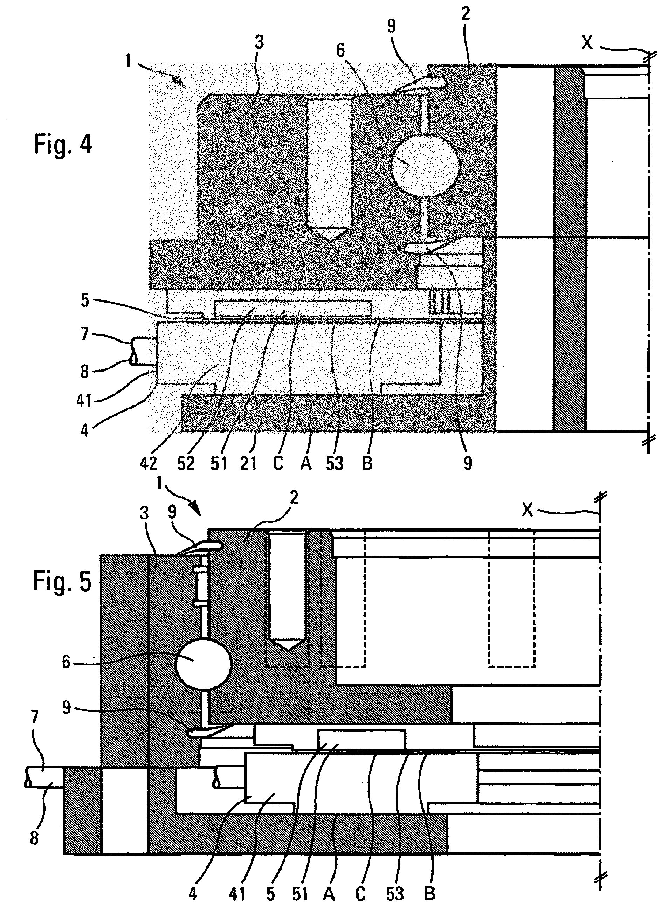

Préférentiellement chaque bloc bobiné possède une face plane (face B des figures 4 et 5) destinée à être en vis-à-vis des blocs aimantés chacune de ces faces destinées à être en vis-à-vis de blocs aimantés étant disposées dans un même plan. Cette caractéristique permet l'usage de blocs bobinés de moteurs linéaires pour la mise en œuvre d'une couronne d'orientation motorisée et évitant d'avoir à créer et ajuster le rayon de courbure de blocs bobinés en fonction du rayon de courbure de bague.

Préférentiellement chaque bloc aimanté possède une face propre (face C des figures 4 et 5) destinée à être en vis-à-vis de blocs bobinés chacune de ces faces C destinée à être en vis-à-vis de blocs bobinés étant disposée dans un même plan. Cette caractéristique permettant l'usage de blocs aimantés de moteurs linéaires pour la mise en œuvre d'une couronne d'orientation motorisée et réduisant la nécessité d'avoir à créer et ajuster le rayon de courbure de blocs aimantés en fonction du rayon de courbure de bague.

Préférentiellement les blocs bobinés ont des formes parallélépipédiques et préférentiellement cuboïdes.

Ce mode de réalisation est particulièrement avantageux car le bloc bobiné possède une surface plane pouvant être assemblée sur un épaulement d'une bague et une autre surface plane parallèle à la première et pouvant être placée parallèlement à un chemin de déplacement des blocs aimantés.

Préférentiellement on fait en sorte que chaque bloc bobiné comprenne un empilage de tôles métalliques magnétiques dans lesquelles sont découpées des encoches laissant passer ledit bobinage propre du bloc bobiné. Ce bobinage propre est adapté à former des pôles générant un champ magnétique glissant.

Préférentiellement ce bobinage comporte plusieurs conducteurs.

Préférentiellement ledit bobinage propre de chaque bloc bobiné est un bobinage triphasé adapté à former des pôles générant un champ magnétique glissant.

Ce mode de réalisation permet de former des blocs bobinés relativement plats et pouvant ainsi être disposés dans un espace restreint entre les deux bagues.

Préférentiellement et selon l'un quelconque des modes de réalisation précédents on fait en sorte que certains au moins des blocs bobinés soient reliés entre eux de manière à ce que des bobinages de blocs bobinés distincts soient électriquement reliées en série.

Grâce à ce mode de réalisation la tension d'alimentation du moteur peut être augmentée au-delà de la tension maximale admissible par un seul bobinage. Par exemple si un bobinage à une tension d'alimentation maximale de 300 Volts alors en couplant ce bobinage en série à un autre bobinage identique appartenant à un autre bloc on obtient un ensemble de bobinages pouvant être alimenté avec une tension maximale de 600 Volts. Ce mode de réalisation est avantageux car la couronne motorisée peut être alimentée avec différentes tensions selon le mode de raccordement des bobinages choisi.

Préférentiellement et selon l'un quelconque des modes de réalisation précédents on fait en sorte que certains au moins des blocs bobinés soient reliés entre eux de manière à ce que des bobinages de blocs bobinés distincts soient électriquement reliées en parallèle.

Ce mode de liaison électrique parallèle permet d'augmenter le couple moteur par rapport à une liaison série.

Selon l'invention, on fait en sorte que les blocs aimantés soient identiques entre eux.

Ceci est particulièrement économique puisque des blocs aimantés sont ainsi standardisés et peuvent être utilisés pour motoriser des couronnes de différents diamètres sans avoir à adapter le type de bloc aimanté pour chaque diamètre de couronne.

Préférentiellement on fait en sorte que chaque bloc aimanté comporte une plaque rectangulaire et plusieurs aimants en formes de barreaux fixés sur la plaque rectangulaire.

Préférentiellement les barreaux d'un même bloc aimanté sont fixés sur la plaque rectangulaire de ce bloc aimanté de manière à être parallèles entre eux. Un bloc aimanté à barreaux identiques entre eux présente l'avantage d'être standard pour plusieurs diamètres de couronnes d'orientation motorisées, la fixation de plusieurs barreaux aimantés sur une bague étant réalisée simplement par assemblage de la plaque rectangulaire portant les barreaux sur la bague.
Préférentiellement on fait en sorte que les blocs aimantés soient fixés sur une surface plane annulaire de la bague sur laquelle ils sont fixés.

Préférentiellement ces barreaux aimantés s'étendent tous dans un même plan perpendiculaire à l'axe d'orientation de la couronne et forment un disque d'aimants préférentiellement disposés à intervalles régulier.

Ce mode de réalisation est avantageux car les blocs aimantés à barreaux parallèles peuvent être implantés sur différents diamètres de couronnes sans avoir à adapter les blocs aimantés à chaque dimension de couronne.

Selon un mode de réalisation préférentiel on fait en sorte que les barreaux d'un même bloc aimanté soient fixés sur la plaque rectangulaire du bloc aimanté de manière à être parallèles entre eux.

Un tel bloc aimanté standard et facile à préfabriquer et à implanter sur une bague à motoriser. Ce type de bloc aimanté est typiquement un bloc aimanté de moteur linéaire.

Préférentiellement et selon l'un quelconque des modes de réalisation précités on fait en sorte que la couronne comprenne des pièces de roulement intercalées entre les bagues annulaires de manière guider le mouvement de l'une des bagues par rapport à l'autre.

Ces pièces de roulement sont des billes, des rouleaux, ou des aiguilles placées en vis-à-vis d'au moins un chemin de roulement formé sur l'une au moins des bagues.

Préférentiellement et selon l'un quelconque des modes de réalisation précités on fait en sorte que la couronne comprenne au moins une règle de mesure fixée sur l'une des bagues et une ou plusieurs têtes de lecture, préférentiellement deux, fixées sur l'autre bague, la ou les têtes de lecture étant adaptées pour générer un signal fonction du déplacement de la règle de mesure.

Cette règle permet de connaître l'orientation de la bague portant la règle par rapport à la bague sur laquelle est fixée la tête de lecture. Cette règle permet aussi de générer un signal propre à chaque tour d'une bague par rapport à l'autre et aussi de mesurer la vitesse de rotation relative entre ces bagues.

Préférentiellement cette règle de mesure est fixée sur la bague mobile et la ou les têtes de lecture sont fixées sur la bague fixe.

Préférentiellement la tête de lecture est une tête magnétique sensible à des variations de champs magnétique générées par déplacement de la règle vis-à-vis de la tête. Ce mode de réalisation par lecture magnétique est préférentiellement choisi car il est peu sensible à un encrassement de la règle lorsque la couronne est utilisée dans un environnement agressif.

Pour minimiser les perturbations électromagnétiques de la tête de lecture magnétique on fait en sorte d'éloigner cette tête des barreaux magnétique et de placer entre ces barreaux et la tête un blindage électromagnétique.

Alternativement la tête de lecture est une tête optique sensible à des variations d'un faisceau lumineux générées par déplacement de la règle vis-à-vis de la tête. Ce mode de réalisation par lecture optique est préférentiellement choisi dans des environnements de fonctionnement de la couronne perturbé électro magnétiquement ou pour une très grande précision.

Le procédé selon l'invention met en évidence la facilité de production de couronnes de différents diamètres grâce à la conception des couronnes de l'invention qui permet une motorisation standardisée adaptable à plusieurs diamètres de couronnes.

Selon le procédé de l'invention on fait en sorte que lesdits blocs bobinés des couronnes de premier type soient disposés sur une surface plane annulaire de la bague sur laquelle ils sont fixés et que les blocs bobinés des couronnes de second type soient disposés sur une surface plane annulaire de la bague sur laquelle ils sont fixés. Cette caractéristique permet, comme indiqué précédemment, la fabrication de couronnes. Il est à noter que ces surfaces planes annulaires des couronnes de premier et second types respectifs sont perpendiculaires aux axes d'orientation des couronnes de premier et second types respectives. Selon le procédé de l'invention, pour réaliser chaque couronne motorisée des premier et second types on fait en sorte que les blocs aimantés des couronnes d'orientation du premier type soient de structure et dimensions identiques à la structure et aux dimensions des blocs aimantés des couronnes d'orientation du second type.

Selon le procédé de l'invention, on fait en sorte que lesdits blocs aimantés des couronnes de premier type soient disposés sur une surface plane annulaire de la bague sur laquelle ils sont fixés et que les blocs aimantés des couronnes de second type soient disposés sur une surface plane annulaire de la bague sur laquelle ils sont fixés. Cette caractéristique permet, comme indiqué précédemment, la fabrication de couronnes. Il est à noter que ces surfaces planes annulaires sur lesquelles sont disposés les blocs aimantés des couronnes de premier et second types respectifs sont perpendiculaires aux axes d'orientation des couronnes de premier et second types respectives.

En d'autres termes pour une couronne donnée, la surface annulaire sur laquelle sont disposés les blocs bobinés est parallèle à la surface annulaire sur laquelle sont disposés les blocs aimantés, ces deux surfaces annulaires étant elles même perpendiculaires à l'axe d'orientation de cette couronne.

Préférentiellement pour la mise en œuvre du procédé de l'invention on fait en sorte que les blocs bobinés soient des blocs bobinés de moteurs linéaires, c'est-à-dire des blocs bobinés générant un champ magnétique glissant à déplacement linéaire.

Ce mode de réalisation est particulièrement économique puisque pour la réalisation de la couronne d'orientation motorisée on utilise des moteurs linéaires, il n'y a donc pas de nécessité d'adapter les blocs bobinés à chaque diamètre de couronne et un même bloc bobiné peut donc être utilisé pour fabriquer des couronnes de différentes tailles.

Un mode de réalisation préférentiel les blocs bobinés peuvent être des blocs bobinés de moteurs linéaires identiques entre eux. Ainsi les structures et une dimension des blocs bobinés des couronnes des premier et second types sont identiques entre elles.

D'autres caractéristiques et avantages de l'invention ressortiront clairement de la description qui en est faite ci-après, à titre indicatif et nullement limitatif, en référence aux dessins annexés, dans lesquels:
la figure 1 représente une vue en perspective d'une couronne assemblée et dotée d'une motorisation ;
la figure 2 représente une vue éclatée en perspective selon un premier côté d'une couronne ;
la figure 3 représente une vue éclatée en perspective selon un second côté d'une couronne ;
la figure 4 représente une vue en coupe d'une couronne à bague extérieure mobile et portant la partie aimantée ;
la figure 5 représente une vue en coupe d'une couronne selon un mode alternatif avec une bague intérieure mobile et portant la partie aimantée.

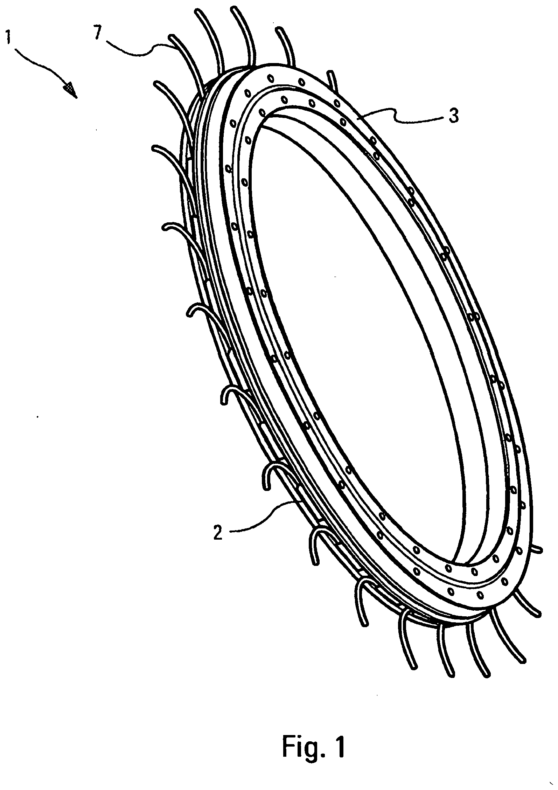

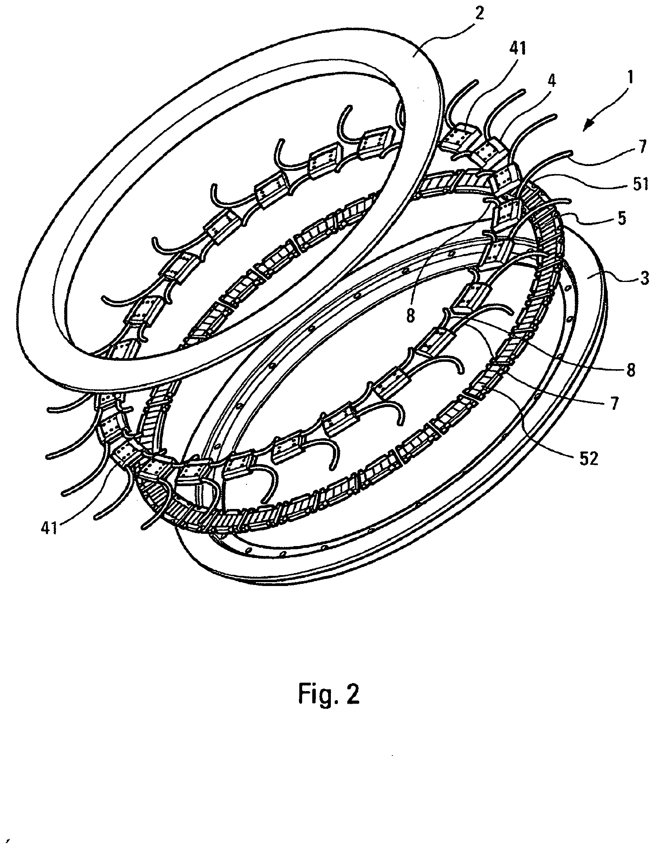

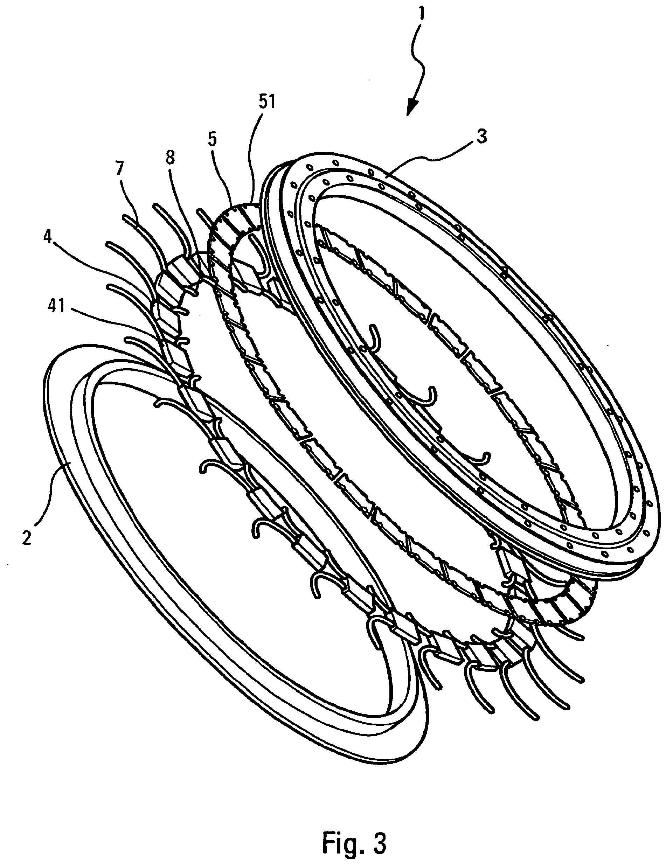

Les figures 1 à 4 présentent une couronne 1 selon un premier mode de réalisation doté d'une bague annulaire intérieure fixe 2 et d'une bague extérieure 3 mobile par rapport à la bague intérieure 2 selon un axe de rotation des bagues X. Un chemin de roulement est pratiqué sur chacune des bagues intérieure et extérieure 2 et 3 et des pièces de roulement (6) sont intercalées entre les bagues de manière à venir rouler sur chacun des chemins de roulements et ainsi permettre le guidage en rotations des bagues 2, 3 l'une par rapport à l'autre.

Un moteur est implanté afin d'entrainer à rotation ces bagues l'une par rapport à l'autre. Ce moteur comporte une partie bobinée 4 qui est assemblée sur la bague fixe intérieure 2 par l'intermédiaire du support 21 et une partie aimantée 5 qui est assemblée sur la bague mobile extérieure 3. La bague 2 est constituée d'une portion support 21 et d'une portion roulement où est formé le chemin de roulement, ces portions sont liées entre elles par vissage. Chacune de ces parties 4, 5 à la forme générale d'un anneau formé de portions discontinues pour la partie 4 et continue pour la partie 5, qui est disposé sur un épaulement correspondant d'une bague. L'assemblage d'une partie bobinée ou aimantée sur sa bague est préférentiellement réalisé par 4 vis qui facilitent la maintenance

La partie bobinée comporte plusieurs blocs bobinés 41 qui sont assemblés sur l'épaulement formé sur le support 21 fixé à la bague intérieur 2 de manière être espacés les uns des autres et à former un anneau de blocs bobinés 41 discontinu.

Chaque bloc bobiné 41 est un bloc de moteur linéaire, c'est-à-dire un bloc générant un flux magnétique selon un axe linéaire glissant. Pour chaque mode de réalisation doté d'un bloc bobiné de moteur linéaire, l'axe de flux magnétique est préférentiellement perpendiculaire à un rayon de couronne. Chaque bloc bobiné a une forme de parallélépipède permettant de conférer une symétrie au bloc nécessaire à l'établissement d'un flux linéaire selon un axe perpendiculaire au rayon de couronne. D'autre part cette forme parallélépipédique est avantageuse car l'assemblage du bloc sur un épaulement de bague se fait par 4 vis d'une face plane A du bloc bobiné sur une face plane complémentaire de l'épaulement. L'autre face B du bloc bobiné 41 qui est parallèle à la face A du bloc se trouve en vis-à-vis d'une face C du bloc aimanté 51 porté par la bague mobile 3 comme cela est particulièrement visible sur la figure 4.

Chaque bloc bobiné 41 possède un empilage de tôles métalliques magnétiques dans lesquelles sont découpées des encoches laissant passer un bobinage triphasé propre de manière à former des pôles générant un champ magnétique glissant.

Les conducteurs formant ce bobinage possède deux portions de connexion 7, 8 prévues pour alimenter électriquement le bobinage (7) et pour protéger le bobinage (sondes thermiques (8). Les portions de connexion 7, des blocs bobinés sont reliées entre elles soit en série soit en parallèle selon les performances motrices recherchées et la tension d'alimentation disponible.

Les blocs aimantés 51 sont constitués d'une plaque rectangulaire 53 sur laquelle sont assemblés des aimants 52 en forme de barreaux parallèles les uns avec les autres. Typiquement un tel bloc aimanté 51 est un bloc aimanté de moteur électrique linéaire.

Préférentiellement on fait en sorte que la longueur des barreaux d'aimants 52 soit égale à la largueur des bobinages des blocs bobinés 41 afin d'obtenir un rendement amélioré.

La couronne 1 comporte également une paire de joints à lèvres 9 disposés de manière à rendre étanche une zone annulaire inter bagues dans laquelle se trouvent les pièces de roulement 6.

La figure 5 présente un mode de réalisation alternatif de celui présenté aux figures 1 à 4. Ce mode alternatif comporte les mêmes parties aimantée et bobinée que celles des figures 1 à 4 sauf que pour le mode de la figure 5 :
- la partie aimantée 5 est montée sur une face de la bague intérieure 2 de couronne qui est la bague mobile ; et
- la partie bobinée 4 est montée sur un épaulement pratiqué sur la bague extérieure 3 qui est la bague fixe.

Enfin selon l'un quelconque des modes de réalisation, il est possible d'implanter sur un épaulement d'une bague mobile une règle de mesure et d'implanter sur la bague fixe une ou 2 têtes de lecture de déplacement de la règle pour ainsi mesurer les positions et vitesses relatives des bagues 2, 3.

Les couronnes selon l'un quelconque des modes de réalisation sont préférentiellement des couronnes de diamètres supérieurs à 600 mm voir supérieurs à plusieurs mètres.

Pour indication, si un bloc bobiné à la capacité de générer une force nominale de 100 N sur le bloc aimanté situé en vis-à-vis et si le rayon moyen de couronne est de 650 mm alors chaque couple bloc bobiné / bloc aimanté permet de générer un couple moteur de 650 N/m. Il suffit alors de définir le nombre de blocs bobinés pour définir le couple moteur total et la puissance motrice totale de la couronne.

Il est préférable que les blocs aimantés forment une chaine continue de blocs aimantés afin d'avoir une motricité continue et régulière sur un tour complet de bague. Le moteur ainsi formé est un moteur synchrone.

Pour obtenir de forts couples moteurs, il est également possible de multiplier le nombre de moteurs de rotation et d'empiler ces moteurs sur différents épaulements pratiqués sur les bagues interne et externe. Ainsi une même bague mobile pourrait comporter plusieurs pistes parallèles entre elles de blocs aimantés et une même bague fixe pourrait comporter plusieurs pistes parallèles entre elles de blocs bobinés, ces pistes étant disposées pour que chaque piste formée de blocs bobinés soit en vis-à-vis avec d'une piste correspondante formée de blocs aimantés.

On peut par exemple faire en sorte que les pistes de blocs aimantés soient chacune dans un plan propre de piste, ces plans propres de pistes de blocs aimantés étant parallèles entre eux et perpendiculaires par rapport à l'axe d'orientation de couronne. En l'occurrence la bague portant les pistes de blocs bobinés possède plusieurs épaulements ayant chacun une surface plane annulaire servant à assembler des blocs aimantés.

Selon ce mode de réalisation les épaulements de la bague sont concentriques et inscrits dans des plans parallèles entre eux et perpendiculaires à l'axe d'orientation de couronne.

Selon un mode de réalisation alternatif au précédent toutes les pistes de blocs bobinés sont disposées sur une même surface plane annulaire de bague et sont donc coplanaires et concentriques entre elles. Dans ce mode de réalisation toutes les pistes de blocs aimantés sont disposées sur une même surface plane annulaire de bague et sont donc coplanaires et concentriques entre elles.

## Revendications

1. Procédé de fabrication d'une couronne d'orientation motorisée (1) de diamètres supérieurs à 1 mètre d'un premier type et d'une couronne d'orientation motorisée d'un second type distinct du premier, chaque couronne (1) des premier et second types comportant deux bagues annulaires (2, 3) montées en rotation l'une par rapport à l'autre selon un axe de rotation de couronne (X), et un moteur de rotation comprenant une partie bobinée (4) et une partie aimantée (5), la couronne d'orientation du premier type ayant un diamètre de bague supérieur d'au moins 20% à un diamètre de bague de la couronne du second type, **caractérisé en ce que** pour réaliser chacune des couronnes motorisées (1) des premier et second types :
- on dispose et fixe sur une surface plane annulaire de ladite bague plusieurs blocs bobinés (41) chacun de ces blocs bobinés (41) comportant au moins un conducteur électrique propre formant un bobinage propre à ce bloc bobiné (41) ; et
- on fixe plusieurs blocs aimantés (51) constituant la partie aimantée (5) de chaque couronne (2, 3)sur l'autre desdites bagues (2, 3) et chacun de ces blocs aimantés (51) comportant plusieurs aimants (52) propres à ce bloc aimanté (51), ces blocs aimantés formant un anneau de blocs aimantés; et
- les blocs bobinés (41) des couronnes d'orientation (1) du premier type sont de structure et dimensions identiques à la structure et aux dimensions des blocs bobinés (41) des couronnes d'orientation (1) du second type les blocs aimantés (51) des couronnes d'orientation (1) du premier type sont de structure et dimensions identiques à la structure et aux dimensions des blocs aimantés des couronnes d'orientation du second type.

## Patentansprüche

1. Herstellungsverfahren eines angetriebenen Drehkranzes (1) einer ersten Bauart mit einem Durchmesser von mehr als 1 Meter und eines angetriebenen Drehkranzes einer zweiten, von der ersten unterschiedlichen Bauart, wobei jeder Kranz (1) der ersten und zweiten Bauart zwei Kreisringe (2, 3) umfasst, die drehbar in Bezug zueinander um eine Kranz-Drehachse (X) montiert sind, und einen Drehmotor, der einen gewickelten Teil (4) und einen magnetischen Teil (5) umfasst, wobei der Drehkranz der ersten Bauart einen um wenigstens das 20% fache größeren Ringdurchmesser als ein Ringdurchmesser des Kranzes der zweiten Bauart hat, **dadurch gekennzeichnet, dass** zur Herstellung jedes der angetriebenen Kränze (1) der ersten und zweiten Bauart:
- mehrere gewickelte Blöcke (41) auf einer ringförmigen ebenen Fläche des Rings (2, 3) angeordnet und befestigt werden, wobei jede dieser gewickelten Blöcke (41) einen elektrischen Leiter zur Bildung einer Wicklung für diesen gewickelten Block (41) ausgeführt ist; und
- mehrere magnetische Blöcke (51), die den magnetisierten Teil (5) jedes Rings (2, 3) bilden, die auf dem anderen der Ringe (2, 3) befestigt sind, und jede dieser magnetischen Blöcke (51) mit einer mehrere Magnete (52) für diesen gewickelten Block (51) hergestellt ist, wobei diese magnetischen Blöcke einen Ring von magnetischen Blöcken bilden; und
- die gewickelten Blöcke (41) der Drehkränze (1) der ersten Bauart eine Struktur und Abmessungen haben, die identisch sind mit der Struktur und den Abmessungen der gewickelten Blöcke (41) der Drehkränze (1) der zweiten Bauart, die magnetischen Blöcke (51) der Drehkränze (1) der ersten Bauart eine Struktur und Abmessungen haben, die identisch sind mit der Struktur und den Abmessungen der magnetischen Blöcke der Drehkränze der zweiten Bauart.

## Claims

1. Method for manufacturing a first type of motorised slewing bearing (1) having a diameter of more than 1 meter and a second type of motorised slewing bearing, distinct from the first, each bearing (1) of the first and second types comprising two annular rings (2, 3) able to rotate with respect to each other about an axis (X) of rotation of the bearing, and a rotation motor comprising a wound part (4) and a magnetized part (5), the first type of slewing bearing having a ring diameter at least 20% greater than a ring diameter of the second type of bearing, the method being **characterized in that** in order to make each of the motorised bearings (1) of the first and second types:
• a plurality of wound units (41) are arranged and fixed on an annular planar surface of said ring (2, 3) each of these wound units (41) being made with at least one electrical conductor of its own forming a winding unique to this wound unit (41); and
• a plurality of magnetized units (51) forming the magnetized part (5) of each bearing (2, 3) is fixed to the other of said rings (2, 3) and each of these magnetized units (51) is made with a plurality of magnets (52) unique to this magnetized unit (51), these magnetized units forming an annulus of magnetized units; and
• the wound units (41) of the slewing bearings (1) of the first type are made with exactly the same structure and dimensions as the wound units (41) of the slewing bearings (1) of the second type, the magnetized units (51) of the slewing bearings (1) of the first type are made with exactly the same structure and dimensions as the magnetized units of the slewing bearings of the second type.
